# EUROPEAN PATENT SPECIFICATION

(11) **EP 4 070 640 B1**
(45) Date of publication and mention of the grant of the patent: **28.01.2026**
(21) Application number: 22169642.0
(22) Date of filing: 24.03.2016
(51) Int. Cl.: A01D 34/78, A01D 69/02, A01D 34/81, H01M 50/24, H01M 50/296

(54) **AN ELECTRICAL MODULE FOR A POWER TOOL AND A POWER TOOL**
ELEKTRISCHES MODUL FÜR EIN ELEKTROWERKZEUG UND ELEKTROWERKZEUG
MODULE ÉLECTRIQUE POUR OUTIL ÉLECTRIQUE ET OUTIL ÉLECTRIQUE

(30) Priority: 27.03.2015 CN 201520179347 U
(43) Date of publication of application: 12.10.2022
(62) Divisional of application: 16771314.8
(73) Proprietor: Techtronic Outdoor Products Technology Limited, Hamilton HM12 (BM)
(72) Inventor: Colber, William E., Lavonia, GA 30553 (US)
(74) Representative: Zimmermann & Partner Patentanwälte mbB

(56) References cited:
- EP-A1- 2 636 295
- US-A- 4 435 486
- US-A- 5 894 715
- US-A1- 2010 163 321
- US-A1- 2010 221 592

## Description

### Technical Field

The invention is related an electric module used in a power tool and a power tool, and more particularly, to an electric module used in a power tool and having a structure, which can prevent water and/or foreign matters entering the battery chamber from contacting with the electrical connection terminal used for connecting with the battery assembly.

### Related Art

In general, lawn mowers, croppers, grass mowers, weeders, portable croppers and self-propelled mowers are used outdoors, such as gardens, lawns and so. Due to different weathers or outdoor environments, such as windy, rainy weathers and so, rain and/or other foreign matters may enter the battery chamber and contact with the electrical connection terminal disposed inside the battery chamber, such that the electrical connection terminal will be oxidized, rusted or will lead to short circuit. A possible solution is including a waterproof enclosed unit for enclosing the battery chamber opening so as to prevent the rain and/or other foreign matters from entering the battery chamber, such that it may prevent the electrical connection terminal from being oxidized, rusted and so. However, the waterproof enclosed unit will cause assembling and disassembling become more inconvenient and the waterproof ability will become lost due to damages. Thus, the units cannot really solve the problem that outdoor power tools need to be protected from being damaged because of accumulated water and/or foreign matters. Document US 5 894 715 A discloses a battery powered electric lawnmower having a removable upper housing with two battery receptacles receiving two battery cells connected in series with a bridging cable and secured to the battery receptacles.

### SUMMARY

Accordingly, the invention provides an electric module used in a power tool defined by claim 1 and a power tool defined by claim 9 for solving the above technical problem.

In accordance with a first aspect of the present invention, there is provided an electric module for use in a power tool comprising: a housing defining a battery chamber arranged to at least partly accommodating a battery assembly; and an electrical connection terminal disposed at a top portion within the housing; wherein the electrical connection terminal is arranged to electrically connect with the battery assembly accommodated in the battery chamber.

In an embodiment of the first aspect, the housing is arranged to prevent water and/or foreign matters in the battery chamber from contacting with the electrical connection terminal disposed at the top portion within the housing.

In an embodiment of the first aspect, the battery assembly is arranged to be inserted to the battery chamber via a battery chamber opening defined by the housing.

In an embodiment of the first aspect, when the battery chamber is empty, the battery chamber is exposed to an external environment through the battery chamber opening.

In an embodiment of the first aspect, the battery chamber opening is opened towards a direction parallel to an operating surface of the power tool.

In an embodiment of the first aspect, the electric module further comprises a battery frame, the battery frame is disposed at the top portion within the housing, and the battery frame is arranged to fix the position of the battery assembly accommodated in the battery chamber.

In an embodiment of the first aspect, the battery frame comprises the electrical connection terminal.

In an embodiment of the first aspect, the power tool is an outdoor power tool and/or a gardening tool.

In an embodiment of the first aspect, the power tool is at least one of a lawn mower, a cropper, a grass mower, a weeder, a portable cropper and a self-propelled mower.

In accordance with a first aspect of the present invention, there is provided a power tool comprising an electric module in accordance with the first aspect.

One of the advantages is that the electrical connection terminal is disposed at the top portion within the housing of the electric module, water and/or foreign matters entering the battery chamber through the battery chamber opening will be adhered to the bottom of the battery chamber due to gravity. The water and/or foreign matters substantially do not contact with the electrical connection terminal disposed at the top portion, such that the battery chamber can be exposed to external through the opening without assembling additional waterproof/enclosed unit to the electric module for preventing water and/or foreign matters from entering the battery chamber and contacting with the electrical connection terminal disposed inside the battery chamber. The structure is simple, the production cost is lower, and unnecessary units in the power tools can be reduced.

### BRIEF DESCRIPTION OF THE DRAWINGS

In order to more clearly illustrate the embodiments of the disclosure, the accompanying drawings for illustrating the technical solutions and the technical solutions of the disclosure are briefly described as below.
Fig. 1 is a perspective view of an electric module used in a power tool according to an embodiment the present invention;
Fig. 2 is a front view of the electric module of Fig. 1;
Fig. 3 is a lateral view of the electric module of Fig. 1;
Fig. 4 is a perspective view of the electric module of Fig. 1, wherein the battery assembly is removed from the battery chamber;
Fig. 5 is a lateral view of the electric module of Fig. 4;
Fig. 6 is a perspective view of the electric module of Fig. 4, wherein the top portion of the housing of the electric module is removed;
Fig. 7 is a lateral view of the electric module of Fig. 6;
Fig. 8 is a perspective view of a power tool comprising the electric module of Fig. 1;
Fig. 9 is a lateral view of the power tool of Fig. 8;
Fig. 10 is a perspective view of the power tool of Fig. 8, wherein the battery assembly is removed from the battery chamber;
Fig. 11is a lateral view of the power tool of Fig. 10; and
Fig. 12 is a perspective view of the electric module in the power tool of Fig. 1, wherein the housing of the power housing is drawn as semitransparent.

### DETAILED DESCRIPTION

The following description with reference to the accompanying drawings is provided to clearly and completely explain the exemplary embodiments of the disclosure. It is apparent that the following embodiments are merely some embodiments of the disclosure rather than all embodiments of the disclosure.

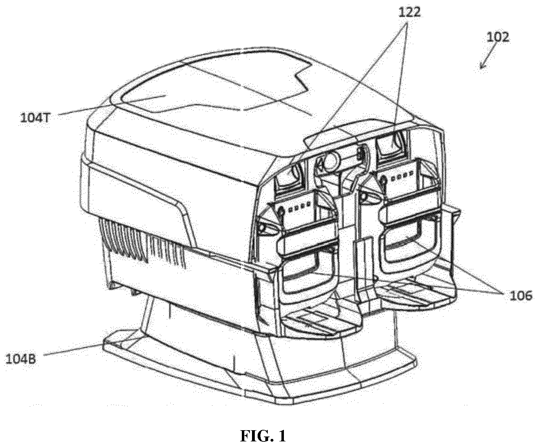

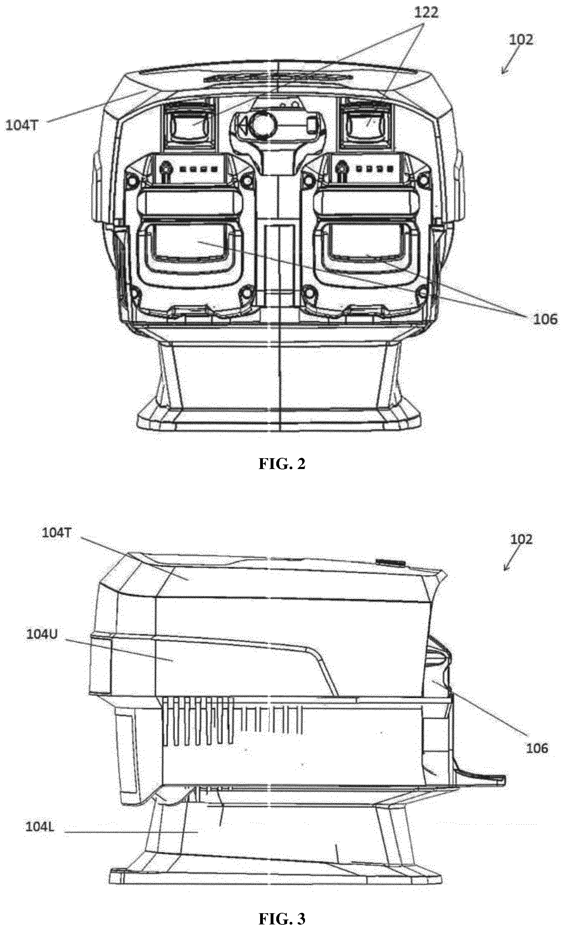

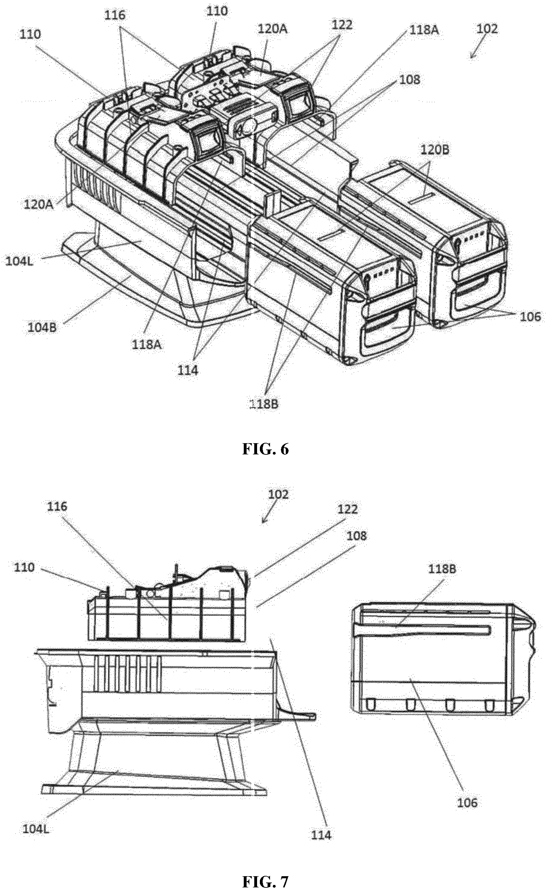

Referring to Figs. 1 to 7, the disclosure provides an electric module 102 used in a power tool 100. The electric module 102 comprises a housing 104 and an electrical connection terminal 110. The housing 104 defines a battery chamber 108 which at least partly accommodate a battery assembly 106. The electrical connection terminal 110 is disposed at the top portion 104T within the housing 104. The electrical connection terminal 110 is electrically connected with the battery assembly 106 accommodated in the battery chamber 108.

As shown in Figures 1 to 5, the electric module 102 comprises a housing 104 and the housing is roughly composed of a top housing 104U and a bottom housing 104L. The housing 104 is preferably made of plastic materials or other rigid materials, such that the housing 104 has certain strength so as to fix and protect elements/components, such as electrical cables and/or electrical connection terminals 110, disposed within the housing 104. The battery chamber 108 is defined between the top housing 104U and the bottom housing 104L. The battery chamber 108 is disposed such that one or more battery assemblies 106 is partly or entirely accommodated inside the battery chamber 108, such as the two battery assemblies 106 in Figs. 1 to 5. Alternatively, the housing 104 is integrally formed or is composed of other combinations/numbers of housings, and the housing 104 may define a substantial identical/similar battery chamber 108 so as to accommodate/receive one or more battery assemblies 106.

Preferably, the electric module 102 has an electrical connection terminal 110 disposed at the top portion 104T inside the housing 104. When the battery assembly 106 is accommodated inside the battery chamber 108, the battery assembly 106 is electrically connected with other components (such as electrical motors, charging circuits, switches, other battery assemblies and so forth) through the electrical connection terminal 110 and conductive wires 112/circuits, which are electrically connected with the electrical connection terminal 110. As shown in Figs. 1 to 7, the battery assembly 106 may be inserted to the battery chamber 108 through the battery chamber opening 114 of the housing 104, and the battery assembly 106 can be removed from the battery the chamber 108 through the battery chamber opening 114. When the battery assembly 106 is removed from the battery chamber 108 or the battery chamber 108 is empty, the battery chamber 108 is exposed to external through the battery chamber opening 114. According to the disclosure, foreign matters, such as water, scraps, leaves, grass clippings and so, may enter the battery chamber 108, which is exposed to the external, from the battery chamber opening 114.

Preferably, since the electrical connection terminal 110 is disposed at the top portion 104T within the housing 104, such as the abovementioned top housing 104U, the electrical connection terminal 110 is disposed at a higher position inside the battery chamber 108 (i.e. more distanced from the ground), and the foreign matters and/or accumulated water entering the battery chamber 108 is adhered to the surface which is closer to the ground, inside the battery chamber 108, such that the foreign matters substantially do not contact with the electrical connection terminal 110, which is disposed at a higher position. Thus, the housing 104 of the disclosure can prevent the water and/or foreign matters entering the battery chamber 108 form contacting with the electrical connection terminal 110, which is disposed at the top portion 104T inside the housing 104.

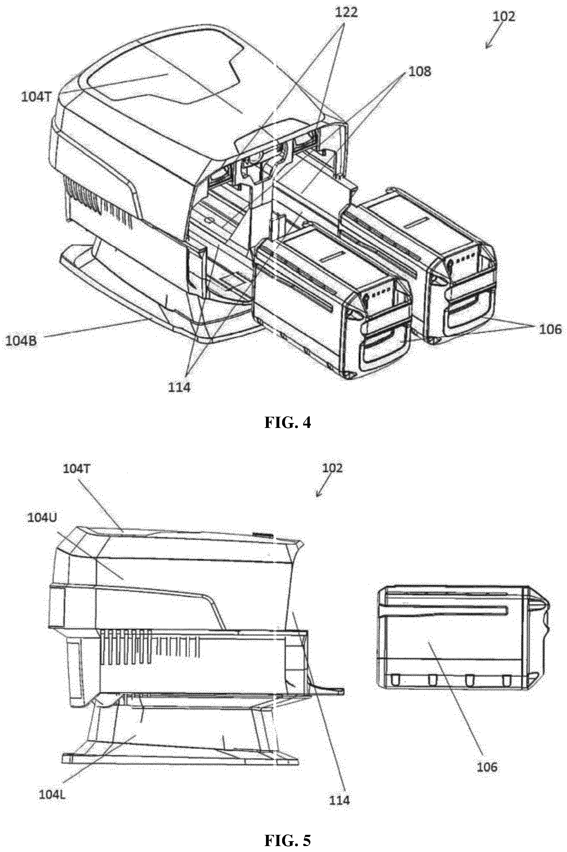

Referring to Figures 4 to 7, accordingly, the electric module 102 further comprises a battery frame 116. The battery frame 116 is disposed at the top portion 104T inside the housing 104. The battery frame 116 is arranged to fix the position of the battery assembly 106 accommodated in the battery chamber 108. For example, the battery frame 116 has a locking unit which can cooperates with the battery assembly 106 so as to selectively lock the relative position between the battery assembly 106 and the battery chamber 108/ battery frame 116. Optionally, the battery frame 116 comprises the electrical connection terminal 110, which is configured for electrically connected with the battery assembly 106. Since the battery frame 116 is disposed/assembled a the top portion 104T inside the housing 104 (such as the top housing 104U), the electrical connection terminal 110 disposed at the battery frame 116 is also disposed at the top portion 104T inside the housing 104, such that it may prevent the water and/or foreign matters entering the battery chamber 108 from contacting with the electrical connection terminal 110 disposed at the top portion 104T inside the housing 104.

In some exemplary embodiments, the battery frame 116 is disposed separately and fixes the battery assembly 106 to the electric module 102/ battery chamber 108. The battery frame 116 may include: a battery housing, a battery assembly fixing unit disposed on the battery housing, and an electrical connection terminal 110 electrically connected with a power component and a battery assembly 106 of a power tool 100. The battery assembly 106 has a battery fixing structure. When the battery assembly 106 is disposed at the battery frame 116, the battery assembly fixing unit is disposed for matching the battery assembly fixing structure for fixing the battery assembly 106 to the battery frame 116, and the battery assembly 106 is electrically connected with the power component of the power tool 100 by the electrical connection terminal 110.

Preferably, the battery frame 116 has a battery housing. Preferably, the battery housing is made of plastic materials or other materials having certain strengths. Preferably, the inner surface of the battery housing has a battery assembly fixing unit, comprising a rib structure 118A disposed at the lateral portion. The rib structure 118A is configured for cooperating with a groove structure 118B, which is disposed on a lateral surface of the battery assembly 106, for fixing the battery assembly 106 to the battery frame 116 so as to prevent the battery assembly 106 moving left and right/up and down relative to the battery frame 116, and it can ensure that the battery assembly 106 is assembled to a correct position on the battery frame 116 along a correct direction (i.e. the surface of the electrical connection terminal disposed at the battery assembly 106 which is farer to the ground). As shown in the figure, each of the two sides of the battery housing has a rib structure 118A configured for cooperating with the groove structure 118B disposed on the two lateral surfaces of the battery housing. Alternatively, the battery frame 116 has a groove structure corresponding to a rib structure disposed at the battery assembly 106. Optionally, the battery frame 116 and the battery assembly 106 can have different numbers of rib/groove structures at corresponding positions. Preferably, the rib structure 118A and the battery housing are integrally formed, and alternatively, the rib structure 118A is disposed on the surface of the battery housing by other combination means.

Preferably, the battery housing has an assembly hole. The assembly hole is configured for cooperating with a fastener, such as a screw and so forth, so as to assemble the battery frame 116 to the housing 104 of the electric module 102. Alternatively, the battery frame 116 is fixed/assembled to the housing 104 of the power tool 100/electric module 102 by other fastening means. The battery hosing and the housing 104 of the electric module 102 can be integrally formed.

Preferably, the electrical connection terminal 110 has more than one metal sheets, which have the shape corresponding to the connecting terminal which needs to be connected with the battery assembly 106. For example, the connecting terminal has 4 metal sheets corresponding to the metal clips of power (+), power (-), information (+) and information (-) of the battery assembly 106 respectively. In addition, the connecting terminal is electrically connected with the power component, the conductive wire 112/circuit or other components (such as electrical motors, charging circuits, switches, other battery assemblies 106 and so forth) in the power tool 100 by, for example, welding.

Preferably, the battery assembly 106 fixing unit further comprises a bolt 120A. When the battery assembly 106 is disposed at the battery frame 116, the bolt 120A cooperates with the lock slot 120B of the battery assembly 106 so as to fix the battery assembly 106 to the battery frame 116 and to prevent the battery assembly 106 from moving back and forth corresponding to the battery frame 116. Optionally, the battery assembly 106 fixing unit further comprises an actuating unit 122. When the actuating unit 122 is pressed, the locking status caused by the bolt 120A of the battery frame 116 and the lock slot 120B of the battery assembly 106 will be relieved and the battery assembly 106 is allowed to be removed from the battery frame 116/battery chamber 108.

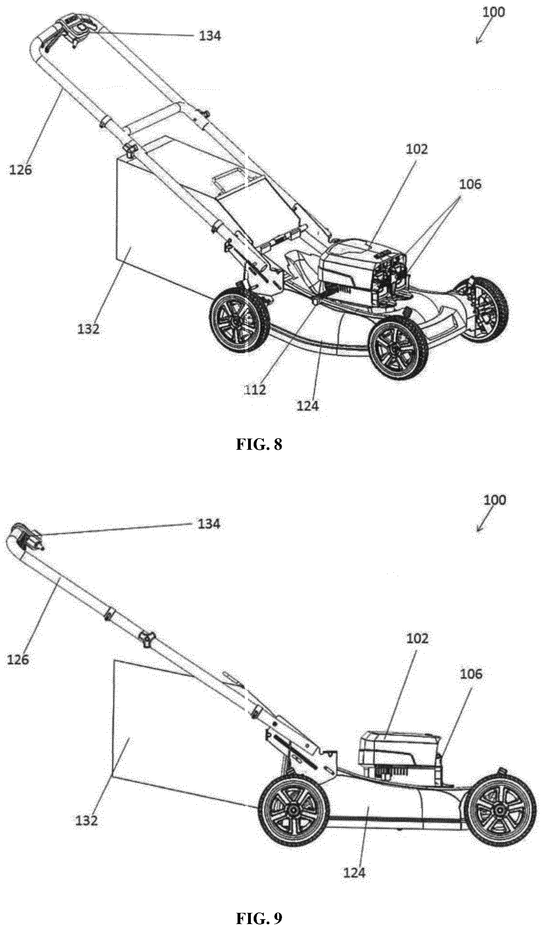

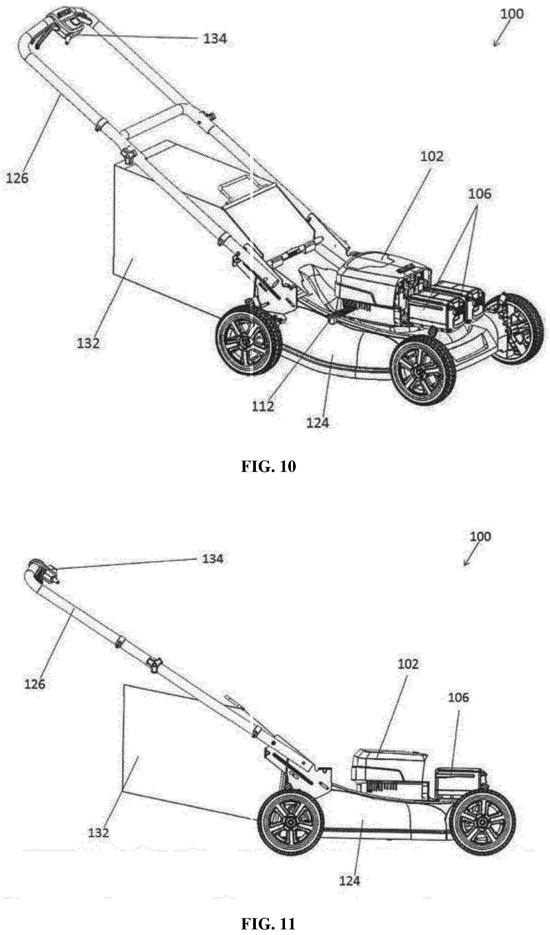

The disclosure further provides a power tool 100 having the above described electric module 102. Referring to Figs. 8 to 11, the power tool 100 is at least one of a lawn mower, a cropper, a grass mower, a weeder, a portable cropper and a self-propelled mower, alternatively, any one of an outdoor power tool or a gardening power tool. For example, the power tool 100 has a chassis 124 used for moving on the ground/lawn, a handle 126 for the user to hold, a blade 128 used for mowing, an electrical motor 130 for driving a rotational blade, a debris collecting room/bag and so, which is a general design of a portable cropper or a self-propelled mower. The electric module 102 is disposed at the chassis 124, the battery chamber opening 114 is opened towards a direction parallel to the operation surface of the power tool 100 (i.e. parallel to the surface where the power tool 100 moves). The electric module 102 is electrically connected with different components, such as electrical motors 130, charging circuits, switches 134 and so forth, of the power tool 100 by conductive wires 112.

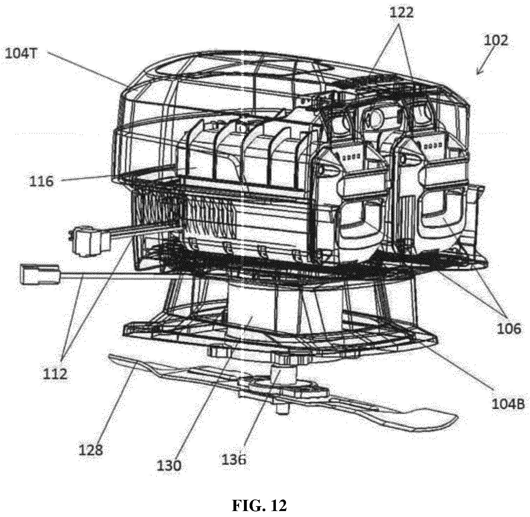

Referring to Fig. 12, the electrical motor 130 is partly accommodated inside the housing 104 of the electric module 102, for example, the bottom portion 104B of the housing 104 is connected with the blade 128, which is used for mowing, by the extended shaft 136. The assembly of the electric module 102, the electrical motor 130 and the blade 128 can be entirely disposed at the chassis 124 of the power tool 100.

When the user operates the power tool 100, the user may first examine that whether there are foreign matters or accumulated water entering the battery chamber 108 through the battery chamber opening 114 and they can remove the foreign matters and accumulated water. Then, the user may insert the battery assembly 106 into the battery chamber 108 horizontally through the battery chamber opening 114 and fixes the battery assembly 106 to the battery chamber 108 by the battery assembly fixing unit of the battery frame 116. Thus, the battery assembly 106 is electrically connected with the switch 134 disposed at the handle 126 of the power tool 100 by the electrical connection terminal 110, which is disposed at the top portion 104T inside the housing 104 of the electric module 102. When the user actuates the switch 134, the battery assembly 106 is electrically connected with different power components of the power tool 100 and activates the power tool 100. When the user needs to remove the battery assembly 106 from the power tool 100, the user may press the actuating unit 122 at the battery frame 116 so as to relieve the locking status and they can remove the battery assembly 106.

Advantageously, the electrical connection terminal 110 is disposed at the top portion 104T inside the housing 104 of the electric module 102, such that the water and/or foreign matters entering the battery chamber through the battery chamber opening 114 substantially do not contact with the electrical connection terminal 110 disposed at the top portion 104T. Thus, the battery chamber 108 is allowed to expose to external through the battery chamber opening 114 without including additional waterproof/enclosed units for preventing water and/or foreign matters entering the battery chamber 108 and contacting with the electrical connection terminal 110 disposed inside the battery chamber 108. The design makes the structure of the electric module 102 simpler, the production cost is low, and unnecessary components/units in the power tool 100 are reduced.

## Claims

1. An electric module (102) for use in a power tool (100) comprising:
a housing (104) defining a battery chamber (108) arranged to at least partly accommodating a battery assembly (106); and
an electrical connection terminal (110) disposed at a top portion within the housing (104); wherein the electrical connection terminal (110) is arranged to electrically connect with the battery assembly (106) accommodated in the battery chamber (108);
**characterized in that** the electric module (102) further comprises a battery frame (116), wherein the battery frame (116) is disposed at the top portion within the housing (104), and the battery frame (116) is arranged to fix the position of the battery assembly (106) accommodated in the battery chamber (108).

2. The electric module (102) according to claim 1, wherein the housing (104) is arranged to prevent water and/or foreign matters in the battery chamber (108) from contacting with the electrical connection terminal (110) disposed at the top portion within the housing (104).

3. The electric module (102) according to claim 1, wherein the battery assembly (106) is arranged to be inserted to the battery chamber (108) via a battery chamber opening (114) defined by the housing (104).

4. The electric module (102) according to claim 3, wherein when the battery chamber (108) is empty, the battery chamber (108) is exposed to an external environment through the battery chamber opening (114).

5. The electric module (102) according to claim 3, wherein the battery chamber opening (114) is opened towards a direction parallel to an operating surface of the power tool (100).

6. The electric module (102) according to claim 1, wherein the battery frame (116) comprises the electrical connection terminal (110).

7. The electric module (102) according to claim 1, wherein the power tool (100) is an outdoor power tool and/or a gardening tool.

8. The electric module (102) according to claim 1, wherein the power tool (100) is at least one of a lawn mower, a cropper, a grass mower, a weeder, a portable cropper and a self-propelled mower.

9. A power tool (100) comprising an electric module (102) in accordance with any one of claims 1 to 8.

## Patentansprüche

1. Elektrisches Modul (102) zur Verwendung in einem Elektrowerkzeug (100), umfassend:
ein Gehäuse (104), das eine Batteriekammer (108) definiert, die so angeordnet ist, dass sie mindestens teilweise eine Batteriebaugruppe (106) aufnimmt; und
eine elektrische Anschlussklemme (110), die an einem oberen Abschnitt innerhalb des Gehäuses (104) angeordnet ist;
wobei die elektrische Anschlussklemme (110) dazu angeordnet ist, um elektrisch mit der Batteriebaugruppe (106) verbunden zu werden, die in der Batteriekammer (108) untergebracht ist;
**dadurch gekennzeichnet, dass** das elektrische Modul (102) ferner einen Batterierahmen (116) umfasst, wobei der Batterierahmen (116) an dem oberen Abschnitt innerhalb des Gehäuses (104) angeordnet ist und wobei der Batterierahmen (116) dazu angeordnet ist, die Position der in der Batteriekammer (108) untergebrachten Batteriebaugruppe (106) zu fixieren.

2. Elektrisches Modul (102) nach Anspruch 1,
wobei das Gehäuse (104) dazu angeordnet ist, um zu verhindern, dass Wasser und/oder Fremdstoffe in der Batteriekammer (108) mit der elektrischen Anschlussklemme (110) in Kontakt kommen, die an dem oberen Abschnitt innerhalb des Gehäuses (104) angeordnet ist.

3. Elektrisches Modul (102) nach Anspruch 1,
wobei die Batteriebaugruppe (106) dazu angeordnet ist, über eine durch das Gehäuse (104) definierte Batteriekammeröffnung (114) in die Batteriekammer (108) eingesetzt zu werden.

4. Elektrisches Modul (102) nach Anspruch 3,
wobei dann, wenn die Batteriekammer (108) leer ist, die Batteriekammer (108) durch die Batteriekammeröffnung (114) einer äußeren Umgebung ausgesetzt ist.

5. Elektrisches Modul (102) nach Anspruch 3,
wobei die Batteriekammeröffnung (114) in eine Richtung parallel zu einer Betriebsoberfläche des Elektrowerkzeugs (100) geöffnet ist.

6. Elektrisches Modul (102) nach Anspruch 1,
wobei der Batterierahmen (116) die elektrische Anschlussklemme (110) umfasst.

7. Elektrisches Modul (102) nach Anspruch 1,
wobei das Elektrowerkzeug (100) ein Elektrowerkzeug für den Außenbereich und/oder ein Gartenwerkzeug ist.

8. Elektrisches Modul (100) nach Anspruch 1,
wobei das Elektrowerkzeug (100) mindestens eines von einem Rasenmäher, einem Cropper, einem Grasmäher, einem Unkrautjäter, einem tragbaren Cropper und einem selbstfahrenden Mäher ist.

9. Elektrowerkzeug (100) mit einem elektrischen Modul (102) nach einem der Ansprüche 1 bis 8.

## Revendications

1. Module électrique (102) destiné à être utilisé dans un outil électrique (100), comprenant :
un logement (104) définissant une chambre de batterie (108) agencée pour recevoir au moins partiellement un ensemble batterie (106) ; et
une borne de connexion électrique (110) agencée au niveau d'une partie supérieure au sein du logement (104) ;
dans lequel la borne de connexion électrique (110) est agencée pour se connecter électriquement à l'ensemble batterie (106) reçu dans la chambre de batterie (108) ;
**caractérisé en ce que** le module électrique (102) comprend en outre un cadre de batterie (116), le cadre de batterie (116) est disposé au niveau de la partie supérieure au sein du logement (104), et le cadre de batterie (116) est agencé pour fixer la position de l'ensemble batterie (106) reçu dans la chambre de batterie (108).

2. Module électrique (102) selon la revendication 1,
dans lequel le logement (104) est agencé pour empêcher de l'eau et/ou des matières étrangères dans la chambre de batterie (108) de venir en contact avec la borne de connexion électrique (110) disposée au niveau de la partie supérieure au sein du logement (104).

3. Module électrique (102) selon la revendication 1,
dans lequel l'ensemble batterie (106) est agencé pour être inséré dans la chambre de batterie (108) via une ouverture de chambre de batterie (114) définie par le logement (104).

4. Module électrique (102) selon la revendication 3,
dans lequel lorsque la chambre de batterie (108) est vide, la chambre de batterie (108) est exposée à un environnement externe par l'intermédiaire de l'ouverture de chambre de batterie (114).

5. Module électrique (102) selon la revendication 3,
dans lequel l'ouverture de chambre de batterie (114) est ouverte dans une direction parallèle à une surface de travail de l'outil électrique (100).

6. Module électrique (102) selon la revendication 1,
dans lequel le cadre de batterie (116) comprend la borne de connexion électrique (110).

7. Module électrique (102) selon la revendication 1,
dans lequel l'outil électrique (100) est un outil électrique d'extérieur et/ou un outil de jardinage.

8. Module électrique (102) selon la revendication 1,
dans lequel l'outil électrique (100) est au moins un parmi une tondeuse de pelouse, une faucheuse, une tondeuse à gazon, une désherbeuse, une faucheuse portative et une tondeuse autopropulsée.

9. Outil électrique (100) comprenant un module électrique (102) selon l'une des revendications 1 à 8.
